Europäisches Patentamt

European Patent Office

Office européen des brevets

(19)

(11) Publication number: **0 117 617**
**B1**

## EUROPEAN PATENT SPECIFICATION

(45) Date of publication of patent specification: **23.03.88**

(51) Int. Cl.⁴: **B 01 D 35/14, F 15 B 21/04**

(21) Application number: **84300399.7**

(22) Date of filing: **24.01.84**

(54) Oil filter, and tractor hydraulic system including same.

(30) Priority: **27.01.83 GB 8302266**

(43) Date of publication of application:
**05.09.84 Bulletin 84/36**

(45) Publication of the grant of the patent:
**23.03.88 Bulletin 88/12**

(84) Designated Contracting States:
**DE FR GB IT ·**

(56) References cited:
**US-A-2 748 947**
**US-A-3 043 262**
**US-A-3 485 368**

(73) Proprietor: **J.I. Case Europe Limited**
**Cardrew Industrial Estate**
**Redruth Cornwall TR15 1ST (GB)**

(72) Inventor: **Williams, Robert Trevor**
**13 Kirklands New Mill**
**Huddersfield West Yorkshire (GB)**

(74) Representative: **Norcliffe, Kenneth Adrian**
**Patents & Trade Marks Department Case**
**Tractors formerly David Brown Tractors Limited**
**Meltham Huddersfield, HD7 3AR West Yorkshire**
**(GB)**

Courier Press, Leamington Spa, England.

## Description

The invention relates to a modification of an oil filter of the known type having an inlet, a replaceable element, an outlet, and a relief valve communicating with the inlet which opens when the pressure drop across the element reaches a predetermined value, the outlet communicating with the relief valve in such a manner that unfiltered oil passes directly from the inlet to the outlet when the element becomes blocked.

According to US—A—2 748 947, a fluid filter has a by-pass brought into operation automatically to ensure that the supply of fluid to a sole outlet leading to a single destination is maintained in the event of clogging of the filter, the by-pass control means comprising a relief valve which when open allows unfiltered fluid to pass directly from the inlet to said outlet. Similarly, according to US—A—3 043 262, a filter having a sole outlet includes a differential pressure relief valve permitting the filter to be by-passed, when it becomes clogged, by allowing unfiltered oil to pass directly from the inlet to said outlet, opening of the valve also triggering a magnetic signal device which indicates visually that the filter needs changing or replacing.

According to US—A—3 485 368, a hydraulic circuit includes a pump, a hydraulic cylinder in which a piston is moveable under the control of an open-centre valve, a replaceable filter having an inlet and an outlet, and complex valve means comprising two distinct valves namely a hydraulically-balanced relief valve disposed between the inlet and a secondary outlet, and a differential-pressure pilot valve so disposed in parallel with the filter as to operate when the pressure drop across the filter reaches a predetermined value to unbalance the relief valve which then allows a proportion of the fluid to by-pass the control valve, the hydraulic cylinder and the filter, thus slowing the movement of the piston and making it apparent and desireable that the filter should be replaced without delay. However, until the filter is replaced, potentially damaging unfiltered fluid continues to circulate through the control valve and the hydraulic cylinder.

The principal object of the present invention is to prevent flow of contaminated oil to components prone to damage thereby when the element becomes blocked. A further object is to oblige the driver of a tractor or the like employing such a filter to replace the element promptly when it becomes blocked.

According to one aspect of the invention, in an oil filter having an inlet, a replaceable element, an outlet, and a single relief valve so disposed in parallel with the element as to open when the pressure drop across the element reaches a predetermined value, a secondary outlet independent of the aforesaid outlet communicates with the relief valve so as to receive unfiltered oil from the inlet and to by-pass the element and the aforesaid outlet when said value is reached.

According to another aspect of the invention, in a tractor hydraulic system comprising a pump arranged to deliver oil under pressure to a filter having an inlet, a replaceable element, an outlet, and a single relief valve so disposed in parallel with the element as to open when the pressure drop across the element reaches a predetermiend value; a power lift mechanism supplied with oil from the outlet; and transmission lubrication means supplied with oil exhausted from the power lift mechanism; the filter has a secondary outlet independent of the aforesaid outlet which communicates with the relief valve so as to receive unfiltered oil from the inlet when said value is reached and pass it directly to the transmission lubrication means while the power lift mechanism is by-passed and thereby rendered inoperative.

A preferred embodiment of the invention will now be described, by way of example only, with reference to the accompanying drawings of which:—

Fig. 1 is an axial section through a relief valve incorporated in an oil filter; and

Fig. 2 is a schematic view of a tractor hydraulic system which includes said filter.

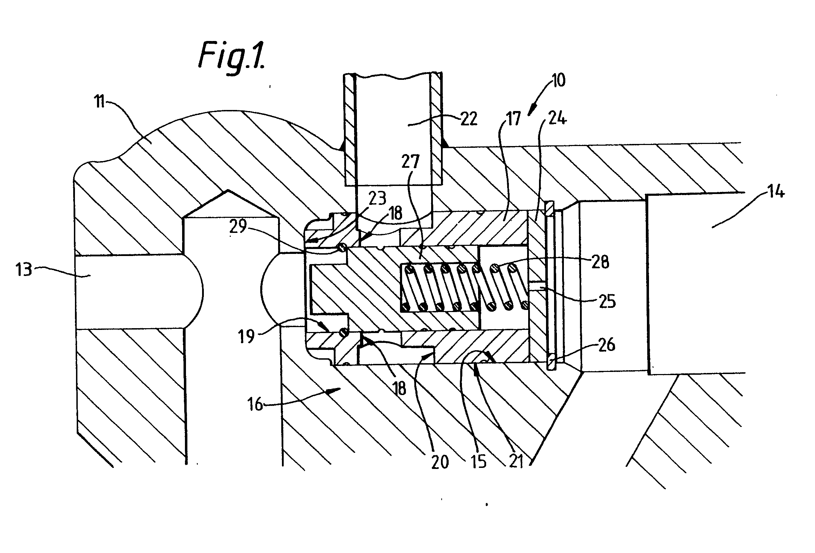

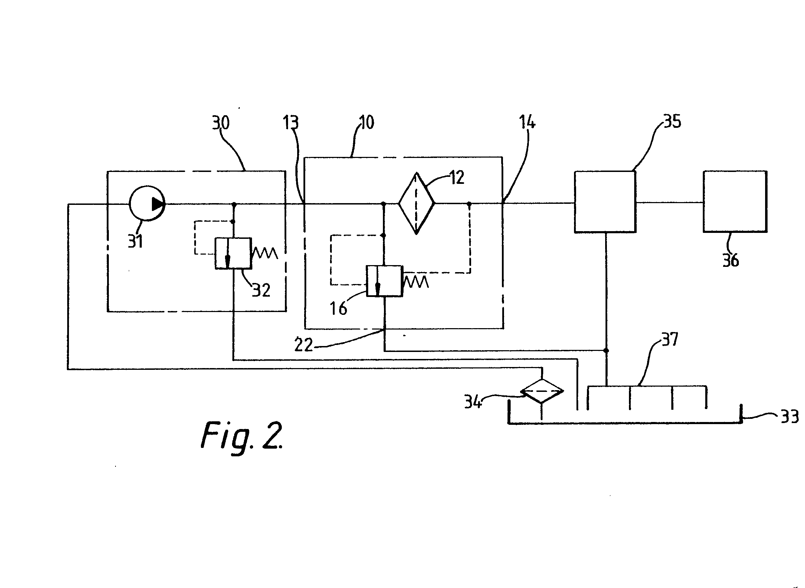

Referring now to Fig. 1 of the drawings, an oil filter 10 comprises a casing 11 which contains a replaceable element 12 (see Fig. 2) capable of withstanding high pressures and has an inlet 13, and an outlet 14 for filtered oil. The inlet 13 and the outlet 14 are directly interconnected by a passage 15 in which there is disposed a differential pressure relief valve 16. The valve 16 includes a sleeve 17 having radial holes 18 by way of which its bore 19 can communicate with an annular groove 20 in its periphery 21, and the groove 20 communicates with a secondary outlet 22 in the casing 11. The sleeve 17 is sealed in the passage 15 by means of an anaerobic adhesive, with that end of the sleeve 17 adjacent the inlet 15 abutting against a shoulder 23 in the passage 15. A disc 24 with a central orifice 25 fits in the passage 15 at that end of the sleeve 17 adjacent the outlet 14, and is retained by a circlip 26 located in the passage 15. A valve spool 27 is slideable in the bore 19 against the action of a helical compression spring 28 confined between the spool 27 and the disc 24, and a circlip 29 located in the bore 19 acts as a stop for limiting movement of the spool 27 in the direction of the inlet 13. The end faces of the spool 27 are of equal area to one another, and that remote from the spring 28 is subjected to the pressure at the inlet 13 of the filter 10 while that in contact with the spring 28 is subjected to the pressure at the outlet 14 for filtered oil. Thus the spool 27 is moved away from its stop 29 to expose the radial holes 18 and allow unfiltered oil to flow from the inlet 13 by way of the holes 18 and the annular groove 20 to the secondary outlet 22 when the difference between the pressure at the inlet 13 and that at the outlet 14, that is to say the pressure drop across the element 12, exerts a force exceeding that of the spring 28. This occurs when blocking of the element 12 causes said pressure drop to reach a value of, say, 60 pounds per square inch.

The oil filter 10 is employed, for example, in the hydraulic system of an agricultural tractor. Such a system usually comprises a pump arranged to deliver oil under high pressure by way of a filter having a replaceable element initially to a power lift mechanism and thence to transmission lubrication means. Hitherto, when the element has become blocked, a relief valve disposed in a passage directly interconnecting the inlet and single outlet of the filter has opened to allow unfiltered oil to be discharged by said outlet to the power lift mechanism and thence to the transmission lubrication means. Thus if the filter element has not been replaced regularly, oil containing contaminating particles has passed to the power lift mechanism and caused serious damage to the control valve means and hydraulic cylinder thereof. Referring now to Fig. 2, the hydraulic system of an agricultural tractor comprises a pump assembly 30 containing a pump 31 and a relief valve 32 and arranged to draw oil from a sump 33 by way of a strainer 34 and to deliver it under high pressure to the inlet 13 of the oil filter 10. Normally, filtered oil flows from the outlet 14 of the filter 10 initially to control valve means 35 of a power lift mechanism 36, thence to transmission lubrication means 37, and ultimately to the sump 33, in the usual way. However, when the element 12 becomes blocked the relief valve 16 opens to permit unfiltered oil to flow from the secondary outlet 22 of the filter 10 directly to the transmission lubrication means 37. The control valve means 35 and the power lift mechanism 36 are therefore by-passed and rendered inoperative when the element 12 becomes blocked, although the essential flow of oil for lubrication is maintained to the transmission which is less prone to damage by contaminating particles therein. Failure of the power lift mechanism 36 to operate indicates to the driver that the probable cause is a blocked filter element 12, and obliges him to replace the element before work can recommence.

Analogous uses of the oil filter 10 will be apparent to the addressees of this specification.

## Claims

1. An oil filter (10) having an inlet (13), a replaceable element (12), an outlet (14), and a single relief valve (16) so disposed in parallel with the element (12) as to open when the pressure drop across the element (12) reaches a predetermined value, characterised in that a secondary outlet (22) independent of the aforesaid outlet (14) communicates with the relief valve (16) so as to receive unfiltered oil from the inlet (13) and to by-pass the element (12) and the aforesaid outlet (14) when said value is reached.

2. A tractor hydraulic system comprising a pump (31) arranged to deliver oil under pressure to a filter (10) having an inlet (13), a replaceable element (12), an outlet (14), and a single relief valve (16) so disposed in parallel with the element (12) as to open when the pressure drop across the element (12) reaches a predetermined value; a power lift mechanism (36) supplied with oil from the outlet (14); and transmission lubrication means (37) supplied with oil exhausted from the power lift mechanism (36); characterised in that the filter (10) has a secondary outlet (22) independent of the aforesaid outlet (14) which communicates with the relief valve (16) so as to receive unfiltered oil from the inlet (13) when said value is reached and pass it directly to the transmission lubrication means (37) while the power lift mechanism (36) is by-passed and thereby rendered inoperative.

## Patentansprüche

1. Ölfilter (10) mit einem Einlaß (13), einem auswechselbaren Element (12), einem Einlaß (14) und einem einzelnen Überdruckventil (16), das parallel zu dem Element (12) so angeordnet ist, daß es sich öffnet, wenn der Druckabfall an dem Element (12) einen vorbestimmten Wert erreicht, dadurch gekennzeichnet, daß ein von dem vorgenannten Auslaß (14) unabhängiger Hilfsauslaß (22) mit dem Überdruckventil (16) in Verbindung steht, um ungefiltertes Öl von dem Einlaß (13) zu empfangen und das Element (12) und den vorgenannten Auslaß (14) zu umgehen, wenn dieser Wert erreicht ist.

2. Hydrauliksystem für einen Traktor, mit einer Pumpe (31) zum Liefern von unter Druck stehendem Öl an einen Filter (10), der einen Einlaß (13), ein auswechselbares Element (12), einen Auslaß (14) und ein einzelnes Überdruckventil (16) hat, das parallel zu dem Element (12) so angeordnet ist, daß es sich öffnet, wenn der Druckabfall an dem Element (12) einen vorbestimmten Wert erreicht; einer Krafthebeeinrichtung (36), die mit Öl von dem Auslaß (14) versorgt wird; und einer Getriebeschmiereinrichtung (37), die mit aus der Krafthebeeinrichtung (36) austretendem Öl versorgt wird; dadurch gekennzeichnet, daß der Filter (10) einen von dem vorgenannten Auslaß (14) unabhängigen Hilfsauslaß (22) hat, der mit dem Überdruckventil (16) in Verbindung steht, um ungefiltertes Öl von dem Einlaß (13) zu empfangen, wenn dieser Wert erreicht ist, und es unmittelbar an die Getriebeschmiereinrichtung (37) weiterzuleiten, während die Krafthebeeinrichtung (36) umgangen und dadurch außer Betrieb gesetzt wird.

## Revendications

1. Filtre à huile (10) ayant une entrée (13), un élément remplaçable (12), une sortie (14) et une soupape unique de décharge (16) disposée parallélement à l'élément (12) afin qu'elle s'ouvre lorsque la perte de charge entre les extrémités de l'élément (12) atteint une valeur prédéterminée, caractérisé en ce qu'une sortie secondaire (22) indépendante de la sortie précitée (14) communique avec la soupape de décharge (16) de manière qu'elle reçoive du fluide hydraulique non filtré provenant de l'entrée (13) et qu'elle mette en dérivation l'élément (12) et la première sortie (14) lorsque ladite valeur est atteinte.

2. Circuit hydraulique pour tracteur, comprenant une pompe (31) destinée à transmettre un fluide hydraulique sous pression à un filtre (10) ayant une entrée (13), un élément remplaçable (12), une sortie (14), et une soupape unique de décharge (16) disposée en parallèle avec l'élément (12) afin qu'elle s'ouvre lorsque la perte de charge entre les extrémités de l'élément (12) atteint une valeur prédéterminée, un mécanisme (36) d'augmentation de puissance recevant du fluide hydraulique de la sortie (14), et un dispositif (37) de lubrification de transmission recevant du fluide hydraulique évacué du mécanisme (36) d'augmentation de puissance, caractérisé en ce que le filtre (10) a une sortie secondaire (22) qui est indépendante de la première sortie (14) et qui communique avec la soupape de décharge (16) afin qu'elle reçoive le fluide hydraulique non filtré provenant de l'entrée (13) lorsque ladite valeur est atteinte, et le transmette directement au dispositif (37) de lubrification de transmission alors que le mécanisme (36) d'augmentation de puissance est mis en dérivation et est ainsi rendu inopérant.

Fig.1.

*Fig. 2.*